# EUROPÄISCHE PATENTANMELDUNG

(11) **EP 0 554 688 A1**
(43) Veröffentlichungstag der Anmeldung: **11.08.1993**
(21) Anmeldenummer: 93100541.7
(22) Anmeldetag: 15.01.1993
(51) Int. Cl.: C09C 1/48, C09C 1/50, C10J 3/46

(54) **Verfahren zur Erzeugung von Russ aus Russ enthaltenden Abfällen**

(30) Priorität: 24.01.1992 DE 4201898
(71) Anmelder: RWE Entsorgung Aktiengesellschaft, D-45141 Essen (DE)
(72) Erfinder: Herbermann, Michael, Dr., W-4390 Gladbeck (DE); Münch, Herbert, Dr., W-4300 Essen 1 (DE); Wintrich, Franz, Dipl.-Ing., W-4300 Essen 13 (DE)

(57) **Zusammenfassung**

Die vorliegende Erfindung betrifft ein Verfahren zur Gewinnung von Ruß durch Einsatz Ruß enthaltender Abfälle in eine Vergasung und den Einsatz des Kohlenmonoxyd enthaltenden Produktgases als solchem oder nach Anreicherung des Kohlenmonoxyds von 0 % Anreicherung bis auf 100 % Anreicherung in eine Rußerzeugungsanlage.

## Beschreibung

Die vorliegende Erfindung betrifft ein Verfahren zur Erzeugung von Ruß durch Einsatz Ruß enthaltender Abfälle in eine Vergasung und den Einsatz des Produktgases als solches oder nach Anreicherung des Kohlenmonoxyds von 0 % Anreicherung bis 100 % Anreicherung, in eine Rußerzeugungsanlage.

Der Gesetzgeber gibt der stofflichen Wiederverwertung von Abfällen den Vorrang vor der Verbrennung der Abfälle.

Die Fachwelt hat sich daher auch auf dem Gebiet der stofflichen Wiederverwertung Ruß enthaltender Abfälle intensiv darum bemüht, solche Materialien auf unterschiedliche Weise einer Wiederverwertung zuzuführen. Ein besonders wichtiges Ruß enthaltendes Abfallprodukt sind gebrauchte Fahrzeugreifen.

Mit hohem Entwicklungsaufwand wurde die Aufarbeitung von Altreifen durch Pyrolyse untersucht. (Siehe z. B. "Recycling von Altreifen durch Pyrolyse in der Wirbelschicht", Dechema Monographien, Weinheim, Verlag Chemie; 86/2, Seiten 181 bis 196 (1980), ISBN 3-527-10769-X; "Recycling of scrab tires to oil and carbon black by vacuum pyrolysis", Christian Roy, Blaise Labrecque, Bruno de Canmia, Aesources, Conservation and Recycling, 4 (1990) 203-213).

Hierbei werden neben bis zu 55 Gew.-% an chemisch sehr inhomogenen Ölen bis zu 40 Gew. -% an Ruß erhalten. Die so erhaltenen Ruße sind jedoch nur mit nach anderen Methoden erzeugten Rußen niederer Qualität vergleichbar.

Zusätzlich fallen weitere feste Abfallmaterialien wie Metalloxide und Stahlcord an.

Eine Gewinnung von Chemierohstoffen aus dem Pyrolyseöl erfordert erheblichen zusätzlichen technischen Aufwand. Üblicherweise wird das Öl verbrannt.

Eine optimale Entsorgung von Reifen und anderen Ruß enthaltenden Abfallmaterialien wie z. B. Druckfarben, Stoßstangen, Kraftstofftanks, schwarze PUR-Schäume, Produkte aus der Elektroindustrie u.a. unter dem Gesichtspunkt der Gewinnung von Wertstoffen ist daher noch immer eine wichtige Aufgabenstellung für die Fachwelt.

Der Anmelderin ist es nunmehr gelungen, ein gegenüber dem Stand der Technik überlegenes Verfahren zur Verwertung Ruß enthaltender Abfälle zu entwickeln, dadurch gekennzeichnet, daß Ruß enthaltendes Abfallmaterial in einen Vergaser eingesetzt wird, das Material vergast wird und das Produktgas als solches oder nach Anreicherung des CO von 0 % Anreicherung bis auf 100 % Anreicherung in eine Rußerzeugungsanlage eingesetzt wird, die unter Gaseinsatz betrieben wird.

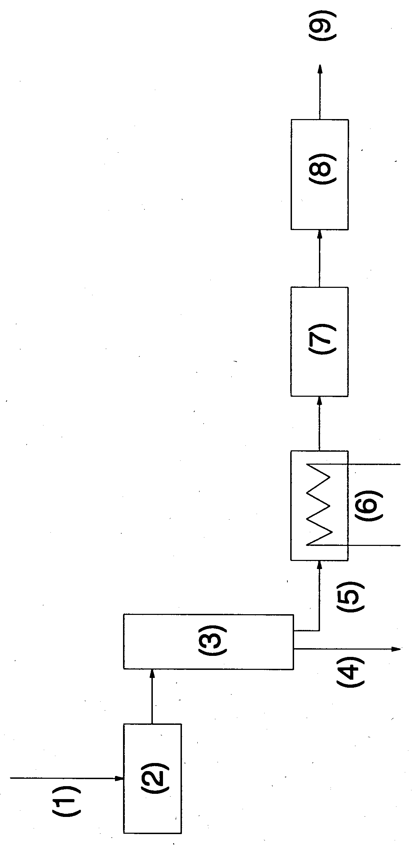

In der Figur wird mit Hilfe eines Blockdiagramms das erfindungsgemäße Verfahren beispielhaft erläutert.

Die Vergasung Kohlenstoff enthaltender Materialien ist seit langem bekannt. Großtechnische Vergaser sind beispielsweise die Shell- und Texaco-Vergaser, in denen bevorzugt schwere, auch stark verschmutzte Rückstandsöle, beispielsweise aus dem Raffineriebetrieb, oder Ölsand- und Ölschieferöle u. a. schwere Öle eingesetzt werden. Es ist auch möglich, im technischen Maßstab schlammartige (slurry) angemaischte, fein verteilte Feststoffe über spezielle Eintragsysteme in solche Vergaser einzusetzen. Die fein verteilten Feststoffe können beispielsweise Kohle, aber auch Abfälle sein.

Die Einsatzmaterialien werden über spezielle Düsen in den im allgemeinen bei 1300 bis 1600° C betriebenen Reaktor eingedüst, wobei üblicherweise zusätzlich Wasserdampf und eine unterstöchiometrische Menge an Sauerstoff eingeführt werden. Hierbei bildet sich nach folgender chemischer Gleichung ein Gemisch von CO und H₂: 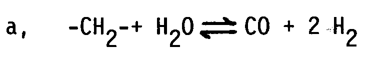
Durch den Zusatz des Sauerstoffs wird ein Teil des Einsatzprodukts zu CO₂ und H₂O verbrannt. Hierdurch wird die erforderliche Wärme für die endotherme Umsetzung gemäß Gleichung a, erzeugt. 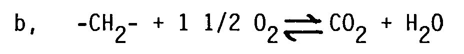
Möglich ist auch eine Fahrweise ohne Dampfzusatz: 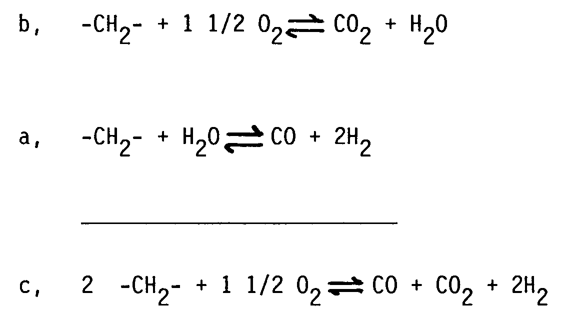
Im Reaktor werden die anorganischen Feststoffe in eine flüssige Schlacke umgewandelt, die unten abgezogen wird. Die Schlacke ist schwer eluierbar und kann beispielsweise im Straßenbau eingesetzt werden. Die hohe Temperatur des Synthesegases kann zur Dampferzeugung genutzt werden. Das Gasgemisch wird anschließend entstaubt und kann durch Wäschen von H₂S und CO₂ befreit werden. Das durch die Dampferzeugung abgekühlte Gas kann durch Quenchen mit Wasser weiterabgekühlt werden, hierbei sammelt sich im Quenchwasser ein qualitativ sehr hochwertiger Ruß an, welcher eine sehr hohe Wärme- und elektrische Leitfähigkeit besitzt.

Ein weiterer Vergasertyp ist der Wirbelschichtvergaser, in dem seitlich eingetragener, fein verteilter Feststoff ohne Anmaischung durch von unten eintretenden Dampf und Sauerstoff in wirbelnder Bewegung gehalten wird.

Hierbei wird ebenfalls unter Verbrennen eines Teils des Einsatzproduktes der überwiegende Teil des eingesetzten Abfallmaterials zu Synthesegas umgesetzt. Die Weiterbehandlung des Produktgases kann ähnlich erfolgen, wie oben bereits beschrieben. Anorganische Feststoffe fallen bei dem Wirbelschichtverfahren als Asche an, die unten aus dem Reaktor ausgeschleust wird. Weitere Asche wird in einem dem Reaktor nachgeschalteten Zyklon aus dem Produktgas abgetrennt. Schlackebildung aus der Asche erfolgt nicht, da die Reaktortemperatur unter 1000° C liegt. Bei leicht schmelzbaren Abfällen befindet sich zur Ausbildung des Wirbelbetts ein fein verteilter inerter Feststoff im Reaktor, wie z. B. Sand.

Die Vergasung kann ferner in einem zyklonartigen Reaktor erfolgen, in dem das fein verteilte Abfallmaterial tangential eingeführt wird, das durch Zusatz von Wasserdampf und Sauerstoff vergast wird. Durch die Strömungsverhältnisse in einem solchen Reaktor kann eine besonders schnelle und vollständige Umsetzung erzielt werden.

Erfindungsgemäß können die Ruß enthaltenden Abfälle nach der üblichen Zerkleinerung oder ggf. unter Aufschmelzen in die beschriebenen oder sonstige Vergasungsreaktoren eingesetzt werden.

Das gewonnene Synthesegas kann anschließend direkt in eine Rußerzeugungsanlage, die üblicherweise unter Gaszusatz betrieben wird, eingesetzt werden. Solche Anlagen sind beispielsweise Furnace-Ruß-Anlagen, Gasruß-Anlagen oder Channelruß-Anlagen, wobei letztere jedoch stark an Bedeutung verloren haben. Das wichtigste Rußerzeugungsverfahren ist das Furnace-Ruß-Verfahren, bei dem bevorzugt hocharomatische, viskose Rückstände aus Erdölraffinierien, Kokereien, aus katalytischen Crackanlagen und Ethylenanlagen eingesetzt werden. Der vorgeheizte Rohstoff wird axial in den rohrförmigen Rußofen eingedüst. Unmittelbar vor dem Injektor wird der fein zerstäubte Rohstoff mit den heißen Gasen aus der Verbrennung eines Brennstoffs und einem Überschuß an vorerhitzter Luft innig gemischt. Bevorzugt dient als Brennstoff Erdgas, aber auch Kokereigas oder Flüssiggas.

Im Unterschied zu diesem Stand der Technik wird erfindungsgemäß Synthesegas als Brennstoff eingesetzt. Hierdurch wird es nicht nur möglich, einen aus Abfall gewonnenen Brennstoff einzusetzen, sondern das im Synthesegas enthaltene Kohlenmonoxyd führt zu einer besonders hohen Rußausbeute. Zusätzlich wird der bereits beschriebene, bei der Synthesegaserzeugung anfallende qualitativ hochwertige Ruß gewonnen. Das erfindungsgemäße Verfahren erlaubt es daher unter Schonung von Ressourcen wie Erdgas, Abfälle zur Erzeugung von hochwertigem Ruß in hohen Ausbeuten einzusetzen. Die Aufarbeitung des Rußes hinter der eigentlichen Rußerzeugungsanlage kann in üblicher Weise erfolgen.

Das Erdgas kann auch nur zum Teil durch Synthesegas ersetzt werden.

Das Kohlenmonoxyd kann erfindungsgemäß jedoch auch im Synthesegas angereichert werden. Darüber hinaus kann auch reines Kohlenmonoxyd aus dem Synthesegas gewonnen werden. An Kohlenmonoxyd angereichertes Synthesegas bzw. reines Kohlenmonoxyd können, wie Synthesegas selbst, anschließend in die Rußerzeugungsanlage eingesetzt werden.

Analog können im Gasruß-Verfahren die genannten Gase als brennbares Trägergas anstelle von Wasserstoff, Kokereigas oder Erdgas eingesetzt werden. Das Trägergas transportiert hierbei ein verdampftes aromatenreiches Öl zu Brennern. Die Brennerflammen schlagen unter Rußbildung gegen eine gekühlte Fläche.

In analoger Weise können die genannten Gase im Channelruß-Verfahren anstelle des teuren Erdgases eingesetzt werden.

Das rohe Synthesegas kann auch einer üblichen Reinigung unterzogen werden, z. B. durch Heißentstaubung, wobei jedoch der bei der Vergasung gebildete Ruß von dem in der Rußerzeugungsanlage hergestellten Ruß getrennt gewonnen wird. Unter wirtschaftlichen und energetischen Gesichtspunkten ist es sinnvoll, das noch sehr heiße rohe Synthesegas in der Rußerzeugungsanlage direkt weiterzuverarbeiten.

Durch das erfindungsgemäße Verfahren ist es nunmehr möglich, Ruß enthaltende Abfälle, insbesondere Altreifen, unter vergleichsweise hohem Anfall eines hochwertigen Rußes zu vergasen, wobei dieser Ruß hinter dem Vergaser abgetrennt werden kann oder wobei das rohe Synthesegas direkt in die Rußerzeugungsanlage eingesetzt wird. In beiden Fällen wird aufgrund des Kohlenmonoxydgehaltes eine höhere Rußausbeute erhalten als bei der konventionellen Fahrweise möglich ist.

Das erfindungsgemäße Verfahren soll nunmehr mit Hilfe eines Beispiels und eines beispielhaften Blockdiagramms näher erläutert werden.

### Beispiel

In einem Furnace-Rußofen werden ca. 800 m³/h Erdgas und ca. 3 t/h kohlenstämmiges Anthracenöl (C-Gehalt 92 Gew.-%) eingesetzt.
Die Rußausbeute betrug 65 Gew.-% bezogen auf eingesetztes Öl.
Zum Vergleich wurden ca. 800 m³/h Synthesegas (1 Vol.-Teil CO zu 1 Vol.-Teil H₂) eingesetzt.
Die Rußausbeute stieg auf 72 Gew.-% an.

### Figur

Über (1) wird das Ruß enthaltende Material in die Aufbereitungsanlage (2) eingeführt. Aus (2) gelangt das zerkleinerte Material in den Vergasungsreaktor (3). Bei (4) wird Schlacke abgezogen. Über (5) fließt das rohe Synthesegas in den Wärmetauscher (6), der beispielsweise aus mehreren Wärmetauschern, einschließlich Dampferzeugungsaggregaten bestehen kann. In (7) erfolgt eine Heißentstaubung. Das entstaubte Gas gelangt nunmehr in den Rußreaktor (8). Über (9) wird der in üblicherweise aufgearbeitete Ruß abgezogen.

## Patentansprüche

1. Verfahren zur Aufarbeitung Ruß enthaltender Abfälle, dadurch gekennzeichnet, daß Ruß enthaltendes Abfallmaterial in einen Vergaser eingesetzt wird, das Material vergast wird und das Produktgas als solches oder nach Anreicherung des Kohlenmonoxyds von 0 % Anreicherung bis auf 100 % Anreicherung in eine Rußerzeugungsanlage, die unter Gaseinsatz betrieben wird, eingesetzt wird.

2. Verfahren nach Anspruch 1, dadurch gekennzeichnet, daß das Abfallmaterial in einen Shell- oder Texaco-Vergaser eingesetzt wird.

3. Verfahren nach Anspruch 1, dadurch gekennzeichnet, daß das Abfallmaterial in einen Vergaser mit tangentialem Produkteinsatz eingesetzt wird.

4. Verfahren nach den Ansprüchen 1-3, dadurch gekennzeichnet, daß als Abfallmaterial Altreifen eingesetzt werden.

5. Verfahren nach den Ansprüchen 1-4, dadurch gekennzeichnet, daß als Rußerzeugungsanlage eine Furnace-Ruß-Anlage eingesetzt wird.

6. Verfahren nach den Ansprüchen 1-4, dadurch gekennzeichnet, daß als Rußerzeugungsanlage eine Gasruß-Anlage eingesetzt wird.

7. Verfahren nach den Ansprüchen 1-6, dadurch gekennzeichnet, daß das Produktgas der Vergasungsanlage direkt in die Rußerzeugungsanlage eingesetzt wird.
